# EUROPEAN PATENT APPLICATION

(11) **EP 2 722 782 A2**
(43) Date of publication of application: **23.04.2014**
(21) Application number: 14151336.6
(22) Date of filing: 05.01.2007
(51) Int. Cl.: G06F 21/00

(54) **Method for providing license corresponding to encrypted contents to client apparatus and digital rights management conversion system using the method**

(30) Priority: 13.02.2006 KR 20060013665
(62) Divisional of application: 07708433.3
(71) Applicant: Intellectual Discovery Co., Ltd., 144-17, Samsung-dong, Gangnam-gu, Seoul (KR)
(72) Inventor: Ahn, Sung Min, 135-080 Seoul (KR); An, Woon Sang, 447-060 Gyeonggi-Do (KR)
(74) Representative: Coralis Harle

(57) **Abstract**

An operating method of a digital rights management (DRM) conversion system for providing a license corresponding to encrypted content to client device, the method comprising the steps of receiving a license request from a client device which a source device distributes content to; and providing the license to the client device,
wherein the providing comprises: generating and transmitting the license to the client device, when the source and client devices are occupied by a same user; and receiving right information of the client device for the content from a server providing the content service and transmitting the license to the client device according to the received right information, when the source and client devices are occupied by different users.

## Description

### Technical Field

The present invention relates to a digital rights management (referred to as 'DRM' hereinafter). More specifically, the invention relates to a method for providing a license corresponding to encrypted contents to a client apparatus, which provides a license in response to a request of the license corresponding to contents super- distributed to a third person in a DRM conversion system, and a DRM conversion system using the same.

### Background Art

With the development and popularization of computer technology, most of commercial transaction copyright objects such as books, comic books, records, movies, broadcasting, or newspaper manufactured, maintained, and managed in analog forms have been digitalized.

Although the digitalized commercial transaction copyright objects are repeatedly used, they are persistent high quality, and it is easy to copy and modify them. Further, it is easy to transfer and distribute even mass copyright objects within a short time. Such characteristics and advantages of a digital form cause analog copyright objects to be digitalized at high speed.

However, such advantages of digital can functions as a factor to infringe a writer's rights and advantages with copyright objects. Since a copy is identical with an original, it makes the will to buy the original weak and corrections and copying are simple without a writer's approval, it is easy to steal, transfer, and distribute the copyright object. Accordingly, illegal copyright objects are spread in a moment over Internet, with the result that it becomes impossible to legally control them.

Such negative factors reduce writer's spirit, which can reduce a manufacturing will with respect to copyright objects. In addition, they can function to cause writers to hesitate a digitalization. Accordingly, there is a demand for a technical protection device for digital copyright objects capable of efficiently managing copyrights while sufficiently maintaining advantages of a digital.

Accordingly, in order to protect benefits and rights for digital copyright objects, a technology of applying a DRM to digital contents has been proposed. Further, various DRM types have been used.

A DRM is a technique, which prevents a use of digital contents without permission in order to protect a copyright holder's benefits and rights. In general, a server providing contents using a DRM type encrypts and transmits contents, and transfers a license to allowable users so that only the allowable users can reproduce and output the contents. The license includes a contents encrypting key used for decrypting the contents and contents use rights being contents use information.

On the other hand, in the related art, a client apparatus reproduces and outputs only contents by a predetermined DRM type. Further, in the same manner, a server provides contents to a client apparatus by applying one DRM type thereto.

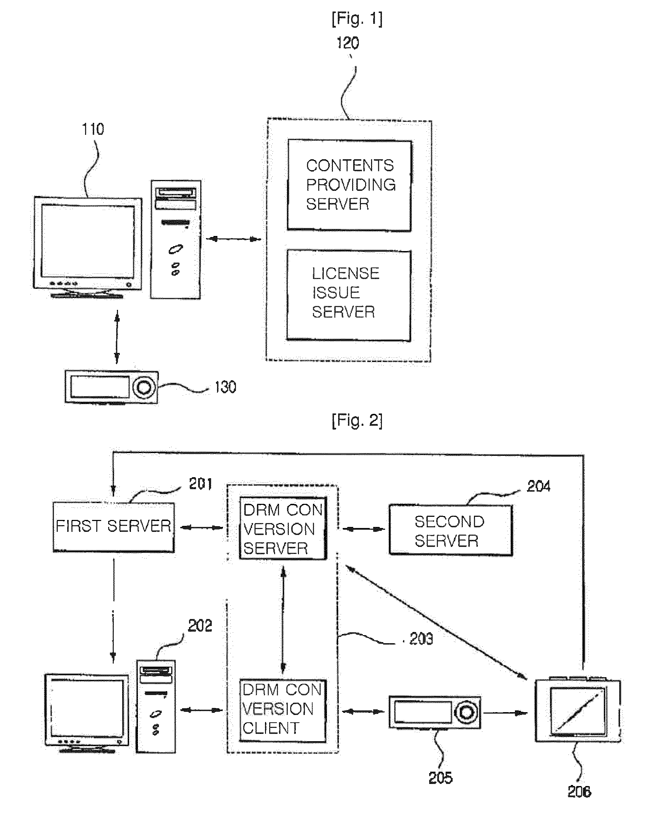

FIG. 1 is a view showing an embodiment of a method for providing contents to which a DRM is applied to a client apparatus according to the related art.

A client apparatus 110 is connected to a first server 120 corresponding to a first DRM type through a predetermined communication network. The first server 120 includes a content providing server and a license issue server. When the client apparatus 110 transmits a contents providing request to the contents providing server 120, the contents providing server 120 transmits contents encrypted by a first DRM type to the client apparatus 110. The client apparatus 110 transmits a license request to the license issue server 120 corresponding to the first DRM type in order to perform a copyright of the encrypted contents. After the client apparatus 110 receives an issued license from the license issue server 120, it can use contents. That is, the client apparatus 110 decrypts, reproduces, and outputs the encrypted contents using a decrypting key included in the license.

Since the first server 120 according to the related art provides only contents encrypted by a predetermined set DRM type, it cannot provide contents encrypted by other DRM types.

Furthermore, in FIG. 1, while a user reproduces contents using the client apparatus 110, when the user reproduces the same contents using a second client apparatus 130 supporting a second DRM type, he can transfer the contents from the client apparatus 110 to the second client apparatus 130. However, because the second client apparatus 130 supports a DRM type different from that of the client apparatus 110, contents transmitted to the second client apparatus 130 from the client apparatus 110 cannot be reproduced.

So as to solve such problems, Korean patent publication No. 10-2005-0120579 has described an arrangement to support input and output of contents between devices of different DRM types. The patent publication is advantageous that it can be used between devices of different DRM types by converting a DRM type of contents. However, when contents to which the DRM type is converted are super-distributed to a third person, since a third person does not have a license for corresponding contents, the third person cannot reproduce super-distributed contents. US patent publication No. 2003/018582 has described a technique for content redistribution. The patent publication is useful in a license distribution for a first and second device. However, patent publication does not disclose DRM conversion system and a licensing for DRM converted content. Moreover, it doesn't have conversion related element, therefore, it cannot perform a process for DRM converted content and a license request for the DRM converted content. And, European Patent EP 1001419 A1 and European Patent EP 1089241 A1 have described a conventional digital data copyright protection system. One system is to provide a copyright protecting system and method which protects a copyright even when no-super distribution format data such as CO or DVD audio data is distributed by package medium as well as super distribution format data distributed via an online network while setting a suitable charge of a copyright when deviating from the range of personal amusement so as to be capable of protecting all rights reserved, and another system is to provide a copyright protection system especially for online music distribution, implementing protection for a copyright of music data by charging appropriate royalties therefor, and facilitating the distribution of the music data. And, US patent No.6,138,119 has described a system and processes for defining and/or describing at least some data characteristics within a secure electronic rights management container and techniques for providing rights management data structure integrity, flexibility, interoperability, user and system transparency, and compatibility. However, systems and techniques in said European and US patent document don't describe a DRM conversion and a licensing for DRM converted content.

Accordingly, there is a need for a method capable of obtaining a license by a third person when contents to which a DRM type is converted are super-distributed to the third person. A sever side corresponding to a DRM before conversion may participates in providing of a corresponding license for user to freely super-distribute the contents. Simultaneously, there is a demand for a DRM conversion system capable of controlling a license of contents super-distributed.

### Disclosure of Invention

### Technical Problem

Accordingly, the present invention has been made to solve the above-mentioned problems occurring in the prior art, and an object of the present invention is to provide a method for providing a license corresponding to encrypted contents to a client apparatus, which receives and provides the license from a sever corresponding to an encrypted DRM type to a third person in response to a request of the license when contents DRM-converted by the DRM conversion system are super-distributed to the third person and the request of the license is received from the third person, and a DRM conversion system using the same.

Further, it is another object of the present invention to receive the contents DRM-converted by a DRM conversion system through a client apparatus, to request a license corresponding to the converted contents from the DRM conversion system, and to receive the license from the server corresponding to an encrypted DRM type through the DRM conversion system.

Moreover, it is a further object of the present invention to cause a server corresponding to a DRM type prior to a DRM conversion of the contents when a client apparatus requests a license corresponding the converted contents from a DRM conversion system to recognize the request of license, and to cause a server corresponding to the DRM type prior to a DRM conversion to have an approval right for the request of the license in order to suitably control a super-distribution of the contents.

In addition, it is an object of the present invention to cause a third person requesting a license for super-distributed contents to pay an amount of money according to the license, and to cause at least one of a server corresponding to the DRM type prior to a DRM conversion, a DRM conversion system, and a server corresponding to the DRM type after a DRM conversion to suitably distributed the mount of the paid money.

### Technical Solution

In order to achieve the aforementioned objects, according to one embodiment of the present invention, there is provided an operating method of a digital rights management (DRM) conversion system for providing a license corresponding to encrypted content to client device, the method comprising the steps of : receiving a license request from a client device which a source device distributes content to; and providing the license to the client device, wherein the providing comprises: generating and transmitting the license to the client device, when the source and client devices are occupied by a same user; and receiving right information of the client device for the content from a server providing the content service and transmitting the license to the client device according to the received right information, when the source and client devices are occupied by different users

According to another aspect of the present invention, there is provided a digital rights management (DRM) conversion system for providing a license corresponding to encrypted content to client device, the system comprising: a license request receiver to receive a license request from a client device which a source device distributes content to; and a license providing section to provide the license to the client device, wherein the license providing section comprises: a first license providing section to generate and transmit the license to the client device, when the source and client devices are occupied by a same user; and a second license providing section to receive right information of the client device for the content from a server providing the content service and transmit the license to the client device according to the received right information, when the source and client devices are occupied by different users.

### Brief Description of the Drawings

Further objects and advantages of the invention can be more fully understood from the following detailed description taken in conjunction with the accompanying drawings, in which:
FIG. 1 is a view showing an embodiment of a method for providing contents to which a DRM is applied to a client apparatus according to the related art;
FIG. 2 is a view schematically showing a network connection relation of a DRM conversion system according to an embodiment of the present invention;
FIG. 3 is a flow chart showing an operating method of a DRM conversion system according to an embodiment of the present invention;
FIG. 4 is a flow chart showing an operating method of a client apparatus according to an embodiment of the present invention;
FIG. 5 is a block diagram an internal construction of a DRM conversion according to an embodiment of the present invention; and
FIG. 6 is a block diagram of a general computer device, which can be used to perform an operating method of a DRM conversion system and an operating method of a client apparatus according to an embodiment of the present invention.

### Best Mode for Carrying Out the Invention

In the present invention, a first server is a server corresponding to a first DRM, and a second server is a server corresponding to a second DRM.

Hereafter, a method for providing a license corresponding to encrypted contents to a client apparatus and a DRM conversion system using the same according to the preferred embodiments of the present invention will be explained, with reference to the accompanying drawings.

FIG. 2 is a view schematically showing a network connection relation of a DRM conversion system according to an embodiment of the present invention.

It is assumed that a first client apparatus 202 supports a first DRM type, and a second client apparatus 205 and a third client apparatus 206 support a second DRM type.

As shown in FIG. 2, the first client apparatus 202 receives first DRM type first contents and a first license corresponding to the first contents, and reproduces the first contents. Here, a first server 201 can be a server to provide a first DRM type contents and license.

When a user of the client apparatus 202 wants to reproduce the first contents from the second client apparatus 205, a DRM conversion system 203 DRM-converts the first DRM type first contents and a first license corresponding to the first contents to generate second DRM type second contents and a second license corresponding to the second contents. In the embodiment of the present invention, the first client apparatus 202 and the second client apparatus 205 support different DRM types, respectively. For example, the first DRM type may be an MS-DRM, and the second DRM type may be an OMA-DRM.

A DRM conversion converts the first DRM type first contents and the first license into an intermediate format, and then converts the intermediate format into the second DRM type second contents and the second license. The DRM conversion is described in Korean Patent publication No. 2005-120579 in detail.

On the other hand, when the second client apparatus 205 super-distributes the converted contents to the third client apparatus 206 being a third person, the third client apparatus 206 transmits a request of a license corresponding to the second contents to the DRM conversion system 203 for using the contents. The DRM conversion system 203 receives the request of the license, and receives and transmits the second license corresponding to the second contents super-distributed to the third client apparatus 206 from the second server 204, to the third client apparatus 206. In the embodiment of the present invention, the second client apparatus 205 and the third client apparatus 206 supports the same DRM type.

Here, the super distribution means to separately distribute contents and licenses. A user can distribute contents used by himself to a third person through a super- distribution. The third person having received the contents obtains a license regardless of the contents and uses the distributed contents.

Here, the third client apparatus 206 having requested the license can request an approval from the first server 201 together with the request of the license. When the DRM conversion system 203 receives the request of the license from the third client apparatus 206, it can request a license issue approval for corresponding contents from the first server 201.

When the DRM conversion system 203 receives the license request from the third client apparatus 206 and requests a license issue approval for corresponding contents from the first server 201, a DRM conversion server can discriminate the first server 201 corresponding to a DRM type prior to a conversion of contents in which a license is requested by referring a conversion log database.

That is, the DRM conversion system 203 records a log regarding a DRM conversion every a DRM conversion in a conversion log database. When the DRM conversion system 203 receives a license request for special contents, it may discriminate the DRM server corresponding to a DRM prior to a conversion of corresponding contents by referring a conversion log database.

The DRM conversion system 203 may be constituted of a DRM conversion server and a DRM conversion client. Namely, partial arrangements of the DRM conversion system 203 can be included in the DRM conversion server, and remaining arrangements can be included in the DRM conversion client.

In the embodiment, the DRM conversion system 203 may include only the DRM conversion server without having the DRM conversion client. In this case, the DRM conversion server performs all functions of the DRM conversion system 203.

Each of the client apparatuses 202, 205, and 206 according to the present invention may include PC, Personal Digital Assistant (PDA), smart phone, handheld PC, portable phone, MP3 player, predetermined communication module such as code division multiplexing access module, Bluetooth module, infrared rays communication module (IrDA), wire/wireless LAN card, and can mount a predetermined microprocessor for performing a multimedia reproducing function in order to perform predetermined calculation performances.

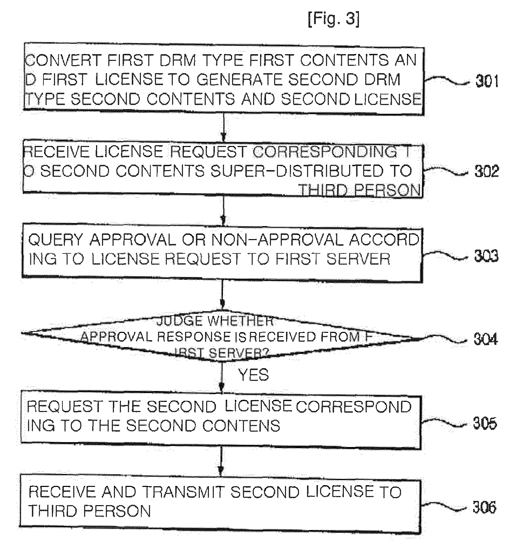

FIG. 3 is a flow chart showing an operating method of a DRM conversion system according to an embodiment of the present invention.

In step 301, the DRM conversion system converts first DRM type first contents and a first license corresponding to the first contents in order to generate second DRM type second contents and a second license corresponding to the second contents. For example, the DRM conversion system may convert first DRM type first contents "loved" and a first license corresponding to the first contents "loved" in order to generate second DRM type second contents "loved" and a second license corresponding to the second contents "loved".

In the embodiment of the present invention, the DRM conversion system can record a DRM conversion log in a database. For example, the DRM conversion log may include first contents, DRM conversion information according to a DRM conversion of a first license corresponding to the first contents, or server information for issuing a license with respect to the first contents.

Moreover, in another embodiment of the present invention, a part of the DRM conversion system can be installed at a client terminal.

In step 302, the DRM conversion system receives the license request corresponding to the second contents super-distributed to the third person. That is, in the present invention, because the third person receives only the second contents from the client apparatus providing the second contents, the third person requests a license corresponding to the second contents from the DRM conversion system.

In this case, when a server corresponding to the DRM type prior to the conversion is cancelled, and the second license corresponding to the second distributed contents is issued, it results in unsuitable ignore of a contents source.

In step 303, the DRM conversion system queries an approval or a non-approval according to the license request to the first server. Namely, since the license is obtained by converting a first license corresponding to the first DRM type first contents, and the first license is issued from the first server, the DRM conversion system queries an approval or a non-approval according to the license request. Further, the DRM conversion system can discriminate the first server by referring the database in which the DRM conversion log is recorded.

In the embodiment, the DRM conversion system does not query an approval or a non-approval according to the license request, but the third person side can request an approval from the first server together with the license request. At this time, the DRM conversion system can provide first server information corresponding to a DRM type prior to a conversion to the third person side.

When an approval response is received from the first server (step 304), the DRM conversion system requests a second license corresponding to the second contents super-distributed to the third person from the second server (step 305).

In step 306, the DRM conversion system receives the second license corresponding to the second contents super-distributed from the second server and transmits the second license to the third person.

In the embodiment of the present invention, when the DRM conversion system receives an approval response from the first server, it can receive an allotment of a predetermined amount of money billed by the third person from the first server. Moreover, the DRM conversion system may provide a part of the amount of the allotted money to the second server.

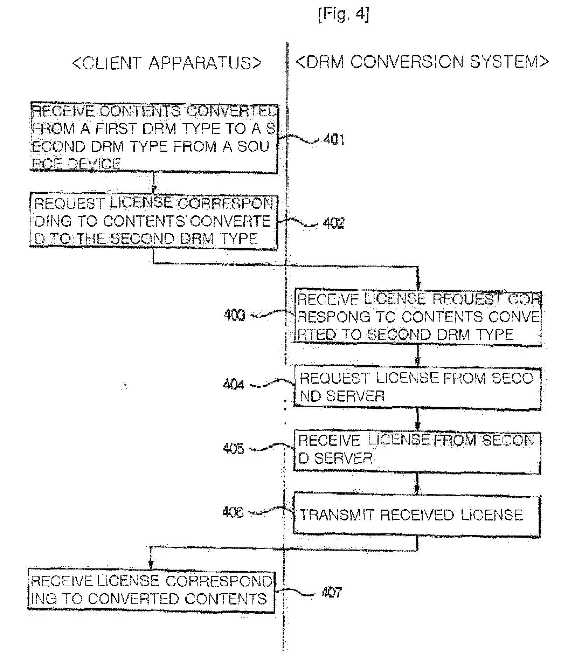

FIG. 4 is a flow chart showing an operating method of a client apparatus according to an embodiment of the present invention.

In step 401, the client apparatus receives the contents from a source device through a predetermined DRM conversion. Here, the contents are contents, which are converted from a first DRM type to a second DRM type. For example, the source device super-distributes music contents "gloved" converted to a "DRM 2" type from a "DRM 1" to the client apparatus being a third person through the DRM conversion system. Accordingly, the client device can receive the music contents "loved" converted to a "DRM 2" type.

In step 402, the client apparatus requests a license corresponding to the contents converted to the second DRM type from the DRM conversion system.

In the embodiment of the present invention, the client apparatus can transmit an approval request corresponding to the license request to the first server. Moreover, the DRM conversion system may transmit a license issue approval request corresponding to the license request to the first server.

In step 403, the DRM conversion system receives a license request corresponding to contents converted to the second DRM type.

In step 404, when the DRM conversion system receives an approval response from the first server corresponding to the first DRM type, it transmits a license request for the contents to the second server.

In step 405, the DRM conversion system receives a license for the contents from the second server.

In step 406, the DRM conversion system transmits the received license to the client apparatus.

In step 407, the client apparatus receives a license corresponding to the converted contents from the second server through the DRM conversion system.

In the embodiment of the present invention, the client apparatus can pay at least one of the server corresponding to the first DRM type, the DRM conversion system, and a server corresponding to the second type a predetermined amount of money for the license corresponding to the converted contents. Here, any one of the server corresponding to the first DRM type, the DRM conversion system, and a server corresponding to the second type receives the payment of the predetermined amount of money, and the server (or system) having received the payment may allot a predetermined amount of money to other servers (systems).

According to the embodiment of the present invention, the license corresponding to the converted contents are issued from the server corresponding to the second DRM type, and can include one of the decrypting key for the second DRM type contents or usage right information for the contents.

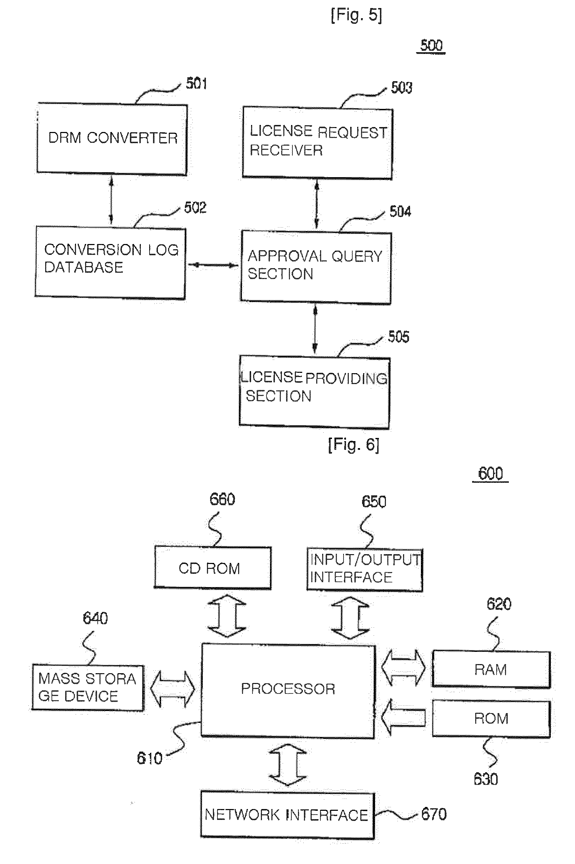

FIG. 5 is a block diagram an internal construction of a DRM conversion according to an embodiment of the present invention.

As shown in FIG. 5, the DRM conversion system 500 includes a DRM converter, a conversion log database 502, a license request receiver 503, an approval query section 504, and a license providing section 505. In the embodiment of the present invention, a part of the DRM conversion system 500 can be installed at a client terminal.

The DRM converter 501 converts the first DRM type first contents and the first license corresponding to the first contents in order to generate the second DRM type second contents and the second license corresponding to the second contents.

In the embodiment of the present invention, the DRM converter 501 may record the DRM conversion log according to the DRM conversion in the conversion log database 502.

The license request receiver 503 receives a license request corresponding to the second contents, which are super-distributed to the third person.

In the embodiment of the present invention, the approval query section 504 queries the first server corresponding to the DRM type prior to a conversion on an approval or a non-approval according to the license request. Furthermore, the approval query section 504 can discriminate the first server by referring the conversion log database in which the DRM conversion log is recorded.

When the license providing section 505 receives an approval, it requests the second license corresponding to the second contents super-distributed to the third person from the second server, and receives and transmits the second license corresponding to the second contents super-distributed to the third person.

The operating method of the DRM conversion system and the operating method of the client apparatus according to the present invention can be embodied with a program command pattern capable of being performed through various computer means and be recorded in a computer readable medium. The computer readable medium can includes one or combination of a program command, a data file, and a data structure. The program command recorded in the computer readable medium is specially designed and constructed for the present invention, but is disclosed to a person having ordinary skill in the computer software art and is used. There is a hardware device constructed to store and perform program commands, which include magnetic media such as hard disks, floppy disks, or magnetic tapes, optical media such as CR-ROM or DVD, magneto-optical media such floptical disks, ROM, RAM, or flash memories. The computer readable medium may be transfer medium such as optical lines, metal lines, or waveguides including a carrier wave for transmitting a signal designating the program command and the data construction. There are machine language codes and high-level language codes as an example of the program commands. Here, the machine language codes are made by a compiler, and the high- level language codes can be executed by a computer using an interpreter. The hardware device can be constructed to be operated as at least one software module in order to execute operations of the present invention, and the converse is the same.

FIG. 6 is a block diagram of a general computer device, which can be used to perform an operating method of a DRM conversion system and an operating method of a client apparatus according to an embodiment of the present invention.

The computer device 600 includes at least one processor 610. The at least one processor 610 is connected to a main storage device including a random access memory (RAM) 620 and a read only memory (ROM) 630. The processor 610 is called central processing unit (CPU). As well known in the art, the ROM 630 functions to unilaterally transmit data and commands to the CPU, and the RAM is used to bilaterally transmit the data and the commands to the CPU. The RAM 620 and the ROM 630 can include any suitable form of the computer readable media. A mass storage device 640 is bilaterally connected to the processor 610, and provides an additional data storage performance, and may one of the aforementioned computer readable media. The mass storage device 640 is used to store programs and data, and may be an auxiliary storage device such a hard disk having a speed lower than that of the main storage device. Also, the mass storage device such as CD ROM 660 can be used. The processor 610 is connected to at least one input/output interface 650. The input/output interface 650 includes video monitors, a track balls, mice, keyboards, microphones, touch screen type display devices, card readers, magnetic or paper readers, voice or writing detectors, joy sticks, or disclosed input/output devices for a computer. Finally, the processor 610 can be connected to wire or wireless communication network through a network interface 670. The procedure of the aforementioned method can be performed through the network connection. The device and tool are well known to a person having ordinary skill in the computer hardware or software art. On the other hand, the aforementioned hardware device can be constructed to be operated as at least one software module in order to perform an operation of the present invention.

### Industrial Applicability

According to the DRM conversion system of the present invention, when the DRM converted contents are super-distributed to a third person, and a license request corresponding to the contents is received from the third person, the DRM conversion system receives the license from a server corresponding to an encrypted DRM type according to the license request, and provides the license to the third person.

Furthermore, in the present invention, a client apparatus receives contents DRM converted through a predetermined DRM conversion system from a first client apparatus, may request a license corresponding to the converted contents from the DRM conversion system and receive the license from a server corresponding to an encrypted DRM type through the DRM conversion system.

Moreover, in the present invention, when the client apparatus requests a license corresponding to the converted contents from the DRM conversion system, it causes a server corresponding to a DRM type prior to a DRM conversion of the contents to recognize a license request fact. This causes the server corresponding to the DRM type prior to a DRM conversion to have an approval right for a license request in order to suitably control a super-distribution of the contents.

In addition, the present invention causes a third person having requested the license for the super-distributed contents to pay an amount of money corresponding to a corresponding license, and at least one of the server corresponding to the DRM type prior to the DRM conversion, the DRM conversion system, and the server corresponding to the DRM type after the DRM conversion can suitably distribute an amount of the paid money.

## Claims

1. An operating method of a digital rights management (DRM) conversion system for providing a license corresponding to encrypted content to client device, the method comprising the steps of:
receiving a license request from a client device which a source device distributes content to; and
providing the license to the client device,
wherein the providing comprises:
generating and transmitting the license to the client device, when the source and client devices are occupied by a same user; and
receiving right information of the client device for the content from a server providing the content service and transmitting the license to the client device according to the received right information, when the source and client devices are occupied by different users.

2. The method according to claim 1, wherein the source and client devices' DRM types are different from each other.

3. The method according to claim 2, wherein the generating comprises issuing a license according to the client's DRM type.

4. The method according to claim 2, further comprising:
providing the content to the client device according to the client's DRM type.

5. The method according to claim 1, wherein the client device distributes the content to the other device occupied by different users.

6. The method according to claim 5, wherein the client device's DRM type and the other device's DRM type are same.

7. The method according to claim 1, wherein the source device is an initial device which is received the encrypted content and the license from the DRM conversion system.

8. The method according to claim 1, wherein the license to the client device comprises a decoding key according to the client device's DRM type and the right information.

9. A digital rights management (DRM) conversion system for providing a license corresponding to encrypted content to client device, the system comprising:
a license request receiver to receive a license request from a client device which a source device distributes content to; and
a license providing section to provide the license to the client device,
wherein the license providing section comprises:
a first license providing section to generate and transmit the license to the client device, when the source and client devices are occupied by a same user; and
a second license providing section to receive right information of the client device for the content from a server providing the content service and transmit the license to the client device according to the received right information, when the source and client devices are occupied by different users.

10. The system according to claim 9, wherein the source and client devices' DRM types are different from each other.

11. The system according to claim 10, wherein the DRM conversion system issues a license according to the client's DRM type.

12. The system according to claim 10, wherein the DRM conversion system provides the content to the client device according to the client's DRM type.

13. The system according to claim 9, wherein the client device distributes the content to the other device occupied by different users.

14. The system according to claim 13, wherein the client device's DRM type and the other device's DRM type are same.

15. The system according to claim 9, wherein the source device is an initial device which is received the encrypted content and the license from the DRM conversion system.
